# EUROPEAN PATENT SPECIFICATION

(11) **EP 4 596 346 B1**
(45) Date of publication and mention of the grant of the patent: **23.09.2026**
(21) Application number: 22963920.8
(22) Date of filing: 03.11.2022
(51) Int. Cl.: B60W 30/02, B60W 60/00, B60W 50/14, B60W 10/20

(54) **ESC ACTIVATION METHOD AND APPARATUS FOR INTELLIGENT DRIVING VEHICLE**
ESC-AKTIVIERUNGSVERFAHREN UND -VORRICHTUNG FÜR INTELLIGENTES FAHRENDES FAHRZEUG
PROCÉDÉ ET APPAREIL D'ACTIVATION D'ESC POUR VÉHICULE À CONDUITE INTELLIGENTE

(43) Date of publication of application: 06.08.2025
(73) Proprietor: Yinwang Intelligent Technologies Co., Ltd., Shenzhen, Guangdong 518110 (CN)
(72) Inventor: YU, Kai, Shenzhen, Guangdong 518129 (CN); ZHOU, Yongyou, Shenzhen, Guangdong 518129 (CN); WANG, Guangyi, Shenzhen, Guangdong 518129 (CN); LING, Mingze, Shenzhen, Guangdong 518129 (CN)
(74) Representative: MERH-IP Matias Erny Reichl Hoffmann Patentanwälte PartG mbB
(86) International application number: PCT/CN2022/129495
(87) International publication number: WO 2024/092609

(56) References cited:
- CN-A- 103 010 294
- CN-A- 108 621 804
- CN-A- 111 216 740
- CN-A- 113 508 070
- CN-A- 113 525 346
- CN-A- 114 261 403
- CN-A- 114 940 151
- DE-A1- 102010 028 486
- DE-A1- 102012 112 802
- DE-A1- 102018 219 052
- DE-A1- 102019 134 081
- JP-A- 2020 132 007
- US-A1- 2020 247 393
- US-A1- 2020 247 393

## Description

### TECHNICAL FIELD

This invention relates to the field of intelligent driving technologies, and in particular, to a method and an apparatus for activating an ESC of an intelligent driving vehicle.

### BACKGROUND

With the development of intelligent driving technologies, vehicles with intelligent driving capabilities become increasingly popular. Due to weather reasons such as rain and snow, a vehicle whose intelligent driving function is enabled and that travels on a wet and slippery road may be in dangerous working conditions such as vehicle understeering or oversteering due to reasons such as inconsistency between a driving torque requested by an autonomous driving system (autonomous driving system, ADS) during steering and a road adhesion condition. In this case, a chassis electronic stability controller (electronic stability controller, ESC) is activated.

In the conventional technology, a security and stability boundary of steering is calculated based on current information, and a steering/braking actuator is controlled within an actual stability boundary. By default, an ESC is not triggered or a probability of triggering the ESC is low. However, after the ESC is activated, an intelligent driving function directly exits. A driver cannot respond, in time, to an emergency case in which the ADS directly exits or takes over a vehicle when the vehicle is unstable, which poses a safety risk.
Document US 2020/0247393 A1 generally discloses a system and method for preemptive chassis control intervention for an autonomous vehicle having a mechanical system and a chassis controller. The chassis controller is configured to output a consumption signal that represents a percentage of an activation threshold consumed by an operation monitored by the chassis controller, wherein the chassis controller is activated to manipulate the mechanical system when the activation threshold is reached. A computing system of the autonomous vehicle receives the consumption signal output by the chassis controller to determine a path plan for the autonomous vehicle based upon the percentage of the activation threshold consumed by the operation monitored by the chassis controller. The computing system further controls the mechanical system to execute the path plan to preempt activation of the chassis controller.
Document DE 10 2019 134 081 A1 generally discloses an ACC function for performing constant speed cruise according to a target speed when there is no preceding other vehicle in a vehicle's driving lane and performing following cruise by maintaining a predetermined inter-vehicle distance when there is a preceding other vehicle, an LKA function for maintaining cruise, an override function for stopping the ACC function and the LKA function by a driver's operation intervention, and a function for performing fallback control of the LKA function, with notifying the driver of ACC function stop, LKA function stop advance notice, and operation takeover, at a time of system limit of the ACC function, LKA override threshold values serving as a determination criterion of the operation intervention for stopping the LKA function at the time of system limit of the ACC function are configured to be altered to a value greater than during normal operation when the ACC function is within the system limit.
Document DE 10 2010 028 486 A1 generally discloses a method that involves activating a speed control unit to maintain speed of a motor car to predetermined desired speed, and performing traction control function for detecting a slip of wheels of the car. The speed control unit is automatically deactivated if the slip of wheels is detected. The speed control unit is automatically deactivated depending on the car speed at which the slip of wheels is detected. The speed control unit is automatically deactivated if the slip of wheels is determined and the car speed lies within a first speed range and not within a second speed range.

### SUMMARY

This invention provides a method and an apparatus for activating a chassis electronic stability controller ESC of an intelligent driving vehicle, to control a traveling status of the vehicle before the ESC of the vehicle is enabled, and reduce a safety risk of taking over the vehicle by a driver. In particular, this invention provides a method for activating a chassis electronic stability controller (ESC) of an intelligent driving vehicle, an apparatus, an intelligent driving vehicle, and a computer-readable storage medium, having the features of respective independent claims. The dependent claims relate to preferred embodiments.

According to a first aspect, this invention provides a method for activating an ESC of an intelligent driving vehicle. The following uses a vehicle management module that performs activation management on the ESC of the intelligent driving vehicle as an execution body, and the method includes the following steps.

The vehicle management module obtains an ESC activation probability after an intelligent driving function of the vehicle is enabled; and the vehicle management module outputs a pre-exit signal of an autonomous driving system ADS and a warning signal when the ESC activation probability is greater than a preset latch interval. The pre-exit signal indicates the ADS to maintain stability of a traveling status of the vehicle, and the warning signal prompts a driver to take over the vehicle. Then, the vehicle management module obtains a stability parameter of the vehicle. The stability parameter represents a stability characteristic of the traveling status of the vehicle. The vehicle management module activates the ESC when the stability parameter meets an ESC activation condition.

In this method, after intelligent driving of the vehicle is enabled, the vehicle management module obtains the ESC activation probability, and determines whether the ESC activation probability is greater than the latch interval. When the ESC activation probability is greater than the latch interval, the vehicle management module outputs the pre-exit signal that indicates the ADS to maintain stability of the traveling status of the vehicle, and simultaneously outputs the warning signal that prompts the driver to take over the vehicle. This gives the driver a reaction time. In addition, when it is determined that the obtained stability parameter of the vehicle meets the ESC activation condition, the ESC is activated, so that the driver can safely take over the vehicle after the ESC is activated, to reduce a safety risk of taking over the vehicle by the driver during vehicle mode switching.

In a possible design, the vehicle management module obtains traveling data of the vehicle, and determines the ESC activation probability based on the traveling data.

In this design, the vehicle management module can accurately determine the activation probability of the ESC based on the traveling data.

In a possible design, the vehicle management module determines an activation factor based on the traveling data. The activation factor includes at least one parameter of a focus degree, a vehicle status parameter, and a road adhesion coefficient. The focus degree represents a capability of the driver to take over the vehicle after the ADS exits. Then, the vehicle management module determines the ESC activation probability based on the activation factor.

In this design, the vehicle management module can accurately determine the ESC activation probability based on the at least one parameter of the focus degree, the vehicle status parameter, and the road adhesion coefficient.

In a possible design, the vehicle management module performs weight normalization on the activation factor, to obtain the ESC activation probability.

In a possible design, the vehicle management module sends the pre-exit signal to the ADS, and determines that the vehicle enters an ADS pre-exit phase, and adjusts a steering direction, a driving torque, and a braking torque of the vehicle by using the ADS, to control the traveling status of the vehicle to be in a stable deceleration status.

In this design, in the ADS pre-exit phase, the vehicle management module adjusts the steering direction, the driving torque, and the braking torque of the vehicle by using the ADS, to control the traveling status of the vehicle to be in the stable deceleration status, so as to control the vehicle to be stable, and provide safety assurance for the driver to take over the vehicle subsequently.

In a possible design, after outputting the pre-exit signal and the warning signal, the vehicle management module determines whether the ESC activation probability is less than the latch interval. In addition, the vehicle management module obtains the stability parameter when the ESC activation probability is greater than the latch interval, or the ESC activation probability is within the latch interval. The vehicle management module collects statistics on duration in which the ESC activation probability is less than the latch interval when determining that the ESC activation probability is less than the latch interval, and stops outputting the pre-exit signal and the warning signal when the duration is greater than a time threshold.

In this design, after the vehicle management module outputs the pre-exit signal and the warning signal, the vehicle enters the ADS pre-exit phase, and in this phase, the vehicle management module controls the vehicle to be in the stable deceleration status, and determines whether the ESC activation probability in the pre-exit phase is less than the latch interval. When determining that the ESC activation probability is not less than the latch interval, the vehicle management module obtains the stability parameter, to determine whether to activate the ESC to maintain stability of the vehicle. When determining that the ESC activation probability is less than the latch interval, the vehicle management module determines that the vehicle gradually tends to be stable under the control of the ADS. In this case, the vehicle management module collects statistics on the duration in which the ESC activation probability is less than the latch interval. When determining that the duration is greater than the time threshold, the vehicle management module determines that the ADS controls the vehicle to restore stability again, and stops outputting the pre-exit signal and the warning signal, and the vehicle restores to the intelligent driving mode.

In a possible design, the vehicle management module activates the ESC, determines that the vehicle enters an ESC activation phase, and simultaneously exits the ADS. In the ESC activation phase, the vehicle management module adjusts the steering direction, the driving torque, and the braking torque of the vehicle by using the ESC, to control the traveling status of the vehicle to be in the stable deceleration status. In addition, the vehicle management module obtains the stability parameter, and determines whether the stability parameter meets a stability condition. The vehicle management module exits the ESC after determining that the stability parameter meets the stability condition.

In this design, in the ESC activation phase, the vehicle management module adjusts the steering direction, the driving torque, and the braking torque of the vehicle by using the ESC, to control the traveling status of the vehicle to be in the stable deceleration status, so that the vehicle can restore stability, and a safe traveling environment is provided for the driver to take over the vehicle.

In a possible design, after exiting the ESC, the vehicle management module adjusts the steering direction, the driving torque, and the braking torque of the vehicle, controls the traveling status of the vehicle to be in the stable deceleration status, and determines whether the driver takes over the vehicle in a warning time period after the warning signal is output. The vehicle management module controls the vehicle to brake when determining that the driver does not take over the vehicle in the warning time period.

In this design, after exiting the ESC, the vehicle management module controls the vehicle to be in the stable deceleration status, to provide safety assurance for the driver to take over the vehicle. After determining that the driver does not take over the vehicle within the warning time period, the vehicle management module controls the vehicle to brake, so as to ensure driving safety and avoid an accident.

According to a second aspect, this invention provides an apparatus for activating an ESC of an intelligent driving vehicle, where the apparatus includes:
a first obtaining unit, configured to obtain an ESC activation probability after an intelligent driving function of the vehicle is enabled;
an output unit, configured to output a pre-exit signal of an autonomous driving system ADS and a warning signal when the ESC activation probability is greater than a preset latch interval, where the pre-exit signal indicates the ADS to maintain stability of a traveling status of the vehicle, and the warning signal prompts a driver to take over the vehicle;
a second obtaining unit, configured to obtain a stability parameter of the vehicle, where the stability parameter represents a stability characteristic of the traveling status of the vehicle; and
an activation unit, configured to activate the ESC when the stability parameter meets an ESC activation condition.

In a possible design, the first obtaining unit is specifically configured to:
obtain traveling data of the vehicle; and
determine the ESC activation probability based on the traveling data.

In a possible design, the first obtaining unit is specifically configured to:
determine an activation factor based on the traveling data, where the activation factor includes at least one parameter of a focus degree, a vehicle status parameter, and a road adhesion coefficient, and the focus degree represents a capability of the driver to take over the vehicle after the ADS exits; and
determine the ESC activation probability based on the activation factor.

In a possible design, the first obtaining unit is specifically configured to:
perform weight normalization on the activation factor, to obtain the ESC activation probability.

In a possible design, the output unit is specifically configured to:
send the pre-exit signal to the ADS, and determine that the vehicle enters an ADS pre-exit phase; and
adjust a steering direction, a driving torque, and a braking torque of the vehicle by using the ADS, to control the traveling status of the vehicle to be in a stable deceleration status.

In a possible design, after the pre-exit signal of the autonomous driving system ADS and the warning signal are output, the second obtaining unit is further configured to:
determine whether the ESC activation probability is less than the latch interval; and
obtain the stability parameter if the ESC activation probability is greater than the latch interval, or the ESC activation probability is within the latch interval; or
collect statistics on duration in which the ESC activation probability is less than the latch interval if the ESC activation probability is less than the latch interval; and stop outputting the pre-exit signal and the warning signal when the duration is greater than a time threshold.

In a possible design, the activation unit is specifically configured to:
activate the ESC, determine that the vehicle enters an ESC activation phase, and exit the ADS;
adjust the steering direction, the driving torque, and the braking torque of the vehicle by using the ESC in the ESC activation phase, to control the traveling status of the vehicle to be in the stable deceleration status; and
obtain the stability parameter, and determine whether the stability parameter meets a stability condition; and exit the ESC if the stability parameter meets the stability condition.

In a possible design, after exiting the ESC, the activation unit is further configured to:
adjust the steering direction, the driving torque, and the braking torque of the vehicle, to control the traveling status of the vehicle to be in the stable deceleration status;
determine whether the driver takes over the vehicle within a warning time period after the warning signal is output; and
control the vehicle to brake if the driver does not take over the vehicle within the warning time period.

According to a third aspect, this invention provides an intelligent driving vehicle. The intelligent driving vehicle includes an ESC, an ADS, and the ESC activation apparatus according to the second aspect. When the ADS is activated, the ESC activation apparatus performs the method according to the first aspect or any one of the possible implementations of the first aspect.

According to a fourth aspect, this invention provides a computer-readable storage medium. The computer-readable storage medium stores a computer program or instructions. When the computer program or the instructions are executed, a computer is enabled to perform the method according to the first aspect or any one of the possible implementations of the first aspect.

For beneficial effects of the second aspect to the fourth aspect, refer to the description of the beneficial effects of the first aspect. Details are not described herein again.

### BRIEF DESCRIPTION OF DRAWINGS

FIG. 1 is a schematic flowchart of a possible method for activating an ESC of an intelligent driving vehicle in a solution according to an embodiment of this invention;
FIG. 2 is a schematic diagram of a possible vehicle traveling status in a solution according to an embodiment of this invention;
FIG. 3 is a schematic diagram of another possible vehicle traveling status in a solution according to an embodiment of this invention;
FIG. 4 is a schematic diagram of still another possible vehicle traveling status in a solution according to an embodiment of this invention;
FIG. 5A to FIG. 5C are a complete schematic flowchart of a possible method for activating an ESC of an intelligent driving vehicle in a solution according to an embodiment of this invention;
FIG. 6 is a schematic diagram of a structure of a possible ESC activation system in a solution according to an embodiment of this invention;
FIG. 7 is a schematic diagram of a structure of an apparatus for activating an ESC of an intelligent driving vehicle in a solution according to an embodiment of this invention;
FIG. 8 is a schematic diagram of a structure of an electronic device in a solution according to an embodiment of this invention; and
FIG. 9 is a schematic diagram of a structure of an intelligent driving vehicle in a solution according to an embodiment of this invention;

### DESCRIPTION OF EMBODIMENTS

Embodiments of this invention provide a method and an apparatus for activating an ESC of an intelligent driving vehicle. The method and the apparatus are based on the same idea. Because principles for resolving problems by using the method and the apparatus are similar, implementations of the apparatus and the method can be mutually used, and repeated descriptions are not provided herein again.

To make objectives, technical solutions, and advantages of embodiments of this invention clearer, the following further describes embodiments of this invention in detail with reference to accompanying drawings. The terms "first" and "second" below in descriptions of embodiments of this invention are merely used for a description purpose, and shall not be understood as an indication or implication of relative importance or implicit indication of a quantity of indicated technical features. Therefore, a characteristic limited by "first" or "second" may explicitly or implicitly indicate that one or more characteristics are included.

For ease of understanding, examples of descriptions of concepts related to this invention are provided for reference.
(1) A chassis electronic stability controller (electronic stability controller, ESC) is a new type of active safety system of a vehicle, and is a further extension of functions of an antilock brake system (antilock brake system, ABS) and a traction control system (traction control system, TCS) of a vehicle. On this basis, a yaw rate sensor, a lateral acceleration sensor, and a steering wheel angle sensor are added that are used when the vehicle is being steered. Driving torques and braking torques of front and rear wheels and left and right wheels are controlled by an electronic control unit, to ensure lateral stability during traveling of the vehicle.
(2) A road adhesion coefficient is a ratio of an adhesion force to a normal (a direction perpendicular to a road) pressure of a wheel. In rough calculation, the road adhesion coefficient may be regarded as a static friction coefficient between a tire and the road. The road adhesion coefficient is determined by the road and the tire. A larger coefficient indicates a larger adhesion force that can be used and a smaller possibility that the vehicle slips.

In descriptions of embodiments of this invention, the term "and/or" describes an association relationship between associated objects and indicates that three relationships may exist. For example, A and/or B may indicate the following three cases: Only A exists, both A and B exist, and only B exists. The character "/" generally indicates an "or" relationship between the associated objects. In this invention, "at least one" means one or more, and "a plurality of" means two or more. In addition, it should be understood that, in the description of this invention, vocabularies such as "first" and "second" are merely used for distinguishing and description, but should not be understood as indicating or implying relative importance, or should not be understood as indicating or implying a sequence. The following describes embodiments of this invention in detail with reference to the accompanying drawings.

In the conventional technology, a security and stability boundary of steering is calculated based on current information, and a steering/braking actuator is controlled within an actual stability boundary. By default, an ESC is not triggered or a probability of triggering the ESC is low. However, after the ESC is activated, an intelligent driving function directly exits. A driver cannot respond, in time, to an emergency case in which the ADS directly exits or takes over a vehicle when the vehicle is unstable, which poses a safety risk.

In order to reduce a safety risk of taking over a vehicle by a driver after the ESC is activated, an embodiment of this invention provides a method for activating an ESC of an intelligent driving vehicle. The following uses, as an execution body, a vehicle management module that performs activation management on the ESC of the intelligent driving vehicle for description. In this method, the vehicle management module obtains an ESC activation probability after an intelligent driving function of the vehicle is enabled; and the vehicle management module outputs a pre-exit signal of an autonomous driving system (autonomous driving system, ADS) and a warning signal when the ESC activation probability is greater than a preset latch interval. The pre-exit signal indicates the ADS to maintain stability of a traveling status of the vehicle, and the warning signal prompts a driver to take over the vehicle. Then, the vehicle management module obtains a stability parameter of the vehicle. The stability parameter represents a stability characteristic of the traveling status of the vehicle. The vehicle management module activates the ESC when the stability parameter meets an ESC activation condition.

The following describes the solutions provided in this application with reference to the accompanying drawings and specific embodiments.

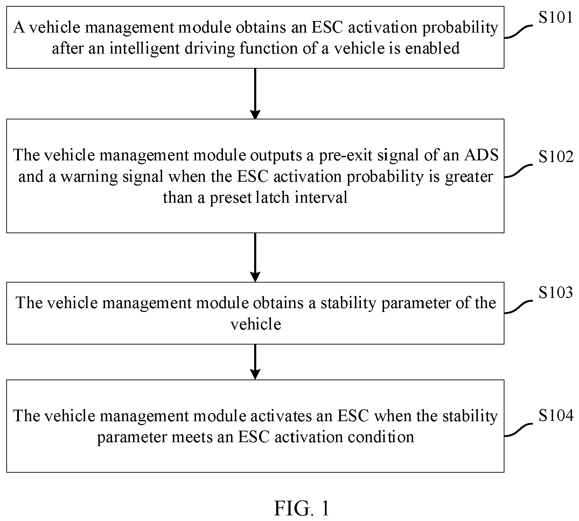

FIG. 1 is a schematic diagram of a method for activating an ESC of an intelligent driving vehicle according to an embodiment of this invention. The following uses, as an execution body, a vehicle management module that performs activation management on the ESC of the intelligent driving vehicle for description. As shown in FIG. 1, the method includes the following steps.

S101: The vehicle management module obtains an ESC activation probability after an intelligent driving function of the vehicle is enabled.

In an implementation, after determining that the intelligent driving function of the vehicle is enabled, the vehicle management module obtains traveling data of the vehicle, and determines the ESC activation probability based on the obtained traveling data.

In some optional implementations, the traveling data includes but is not limited to: operation input information of a driver, vehicle status information obtained by a vehicle sensor, a driver image collected by an in-vehicle camera, and a road image and an environment image collected by a camera outside the vehicle. The operation input information of the driver includes but is not limited to: a steering wheel angle, a throttle pedal stroke, and a brake pedal stroke. The vehicle status information obtained by the sensor includes but is not limited to: horizontal and longitudinal accelerations, a wheel speed, a vehicle speed, a yaw angular velocity, a side-slip angle, and a wheel slip rate.

In an implementation, the vehicle management module may perform S101 by using the following steps:
A1: The vehicle management module determines an activation factor based on the traveling data.

The activation factor includes at least one parameter of a focus degree, a vehicle status parameter, and a road adhesion coefficient. The focus degree represents a capability of the driver to take over the vehicle after the ADS exits.

The vehicle management module may determine the activation factor in the following manner.

In some optional implementations, the vehicle management module determines the focus degree of the driver based on the driver image in the traveling data.

In an implementation, the vehicle management module may input the obtained driver image into a trained image recognition model, extract a feature from the image based on the trained image recognition model, to obtain a facial feature parameter, and determine the focus degree based on the facial feature parameter.

Optionally, the vehicle management module may determine the focus degree of the driver based on a correspondence between a facial feature parameter and a focus degree. When there are a plurality of facial feature parameters, a sum of focus degrees corresponding to the plurality of facial feature parameters is used as a current focus degree of the driver.

In some optional implementations, the vehicle management module determines the vehicle status parameter based on the vehicle status information in the traveling data. The vehicle status parameter includes at least one parameter of a slip rate, a side-slip angle deviation, a yaw angular velocity deviation, and a lateral acceleration.

In an implementation, the vehicle management module may determine the vehicle status parameter in the following manner.

In some optional implementations, the vehicle management module may determine slip rates of wheels based on the wheel speed and the vehicle speed in the vehicle status information, and use a largest value of the slip rates of the wheels as a first slip rate. The vehicle management module uses a maximum value of the wheel slip rate in the vehicle status information as a second slip rate. The vehicle management module uses, as the vehicle status parameter, a slip rate obtained by combining the first slip rate and the second slip rate by using a Kalman filtering method.

In some optional implementations, the vehicle management module may use the lateral acceleration in the vehicle status information as the vehicle status parameter.

In some optional implementations, the vehicle management module may determine a lateral vehicle speed and a longitudinal vehicle speed of the vehicle based on the vehicle status information, and determine an actual side-slip angle of the vehicle in a current status based on the determined longitudinal vehicle speed and the determined lateral vehicle speed. The vehicle management module may further input the vehicle status information into a linear 2-degree-of-freedom vehicle model, and obtain an ideal side-slip angle based on the linear 2-degree-of-freedom vehicle model. The vehicle management module uses a difference between the actual side-slip angle and the ideal side-slip angle as the side-slip angle deviation.

Optionally, in this embodiment of this invention, the vehicle management module may select the linear 2-degree-of-freedom vehicle model as a reference model, and use a centroid side-slip angle β when the vehicle enters a stable status as a reference value. To ensure stable traveling of the vehicle, an upper limit value of a centroid side-slip angle is limited by the vehicle model to |βₘₐₓ|=µg(b/u²+ma/k₂L), and the smaller value min{β, |βₘₐₓ|} in β and |βₘₐₓ| is used as the ideal side-slip angle.

µ represents a road adhesion coefficient in the vehicle status information; a represents a distance from a front axle to a centroid; b represents a distance from a rear axle to the centroid; k₂ represents cornering stiffness of a rear wheel; g represents a gravity acceleration; m represents a vehicle weight; and L represents a distance between rear wheels.

In some optional implementations, the vehicle management module uses the yaw angular velocity in the vehicle status information as an actual yaw angular velocity. The vehicle management module inputs the vehicle status information into a vehicle model, and determines an ideal yaw angular velocity based on the vehicle model. The vehicle management module uses a difference between the actual yaw angular velocity and the ideal yaw angular velocity as the yaw angular velocity deviation.

Optionally, the vehicle management module may input the vehicle status information into the linear 2-degree-of-freedom vehicle model, use a yaw angular velocity ω when the vehicle enters the stable status as a reference value, and limit an upper limit value of the yaw angular velocity to |ωₘₐₓ|=0.85 µg/Vₓ based on the vehicle model. µ represents the road adhesion coefficient in the vehicle status information, Vₓ represents a longitudinal vehicle speed, and g represents the gravity acceleration. The vehicle model uses the smaller value min{ω, |ωₘₐₓ|} of ω and |ωₘₐₓ| as the ideal yaw angular velocity, and outputs the ideal yaw angular velocity.

In some optional implementations, the vehicle management module determines the road adhesion parameter based on the road image and the vehicle status information.

In an implementation, the vehicle management module may input the road image into a convolutional neural network, extract a feature from the road image based on the convolutional neural network, to obtain a road feature, and determine a first road adhesion coefficient based on the road feature. The convolutional neural network is obtained through training in advance based on a historical road image and a historical road adhesion coefficient corresponding to the historical road image.

The vehicle management module may determine a second road adhesion coefficient based on the vehicle status information by using a three-degree-of-freedom dynamic equation of the vehicle.

Optionally, the vehicle management module may normalize tire forces based on the vehicle status information and a dugoff tire model, and determine the second road adhesion coefficient by using an EKF method and based on the three-degree-of-freedom dynamic equation.

The vehicle management module determines the road adhesion coefficient based on the first road adhesion coefficient and the second road adhesion coefficient, and uses the road adhesion coefficient as the vehicle status parameter.

Optionally, the vehicle management module may combine the first road adhesion coefficient and the second road adhesion coefficient into the road adhesion coefficient by using a fuzzy theory.

A2: The vehicle management module determines the ESC activation probability based on the activation factor.

In A2, the vehicle management module may perform weight normalization on the activation factor to obtain the ESC activation probability.

In some optional implementations, the vehicle management module may determine the ESC activation probability by using the following formula: ${P}_{act} \left(ESC\right) = \frac{{α}_{0} {f}_{0} \left(λ\right) + {α}_{1} {f}_{1} \left({a}_{y}\right) + {α}_{2} {f}_{2} \left(Δβ\right) + {α}_{3} {f}_{3} \left(Δω\right) + {α}_{4} {f}_{4} \left(μ\right) + {α}_{5} {f}_{5} \left({x}_{1},{x}_{2}…\right)}{{\sum }_{0}^{5} {α}_{i}}$

P_{act}(ESC) represents the ESC activation probability, P_{act}(ESC)∈ [0, 1], α0, α1, α2, α3, α4, and α5 represent weight parameters, f₀(λ) represents a normalized slip rate, f₁(a_{y}) represents a normalized lateral acceleration, f₂(Δβ) represents a normalized side-slip angle deviation, f₃(Δω) represents a normalized yaw angular velocity deviation, f₄(µ) represents a normalized road adhesion parameter, f₅(x₁, x₂...) represents a normalized focus degree, and x₁ and x₂ represent facial feature parameters of the driver.

S102: The vehicle management module outputs a pre-exit signal of the ADS and a warning signal when the ESC activation probability is greater than a preset latch interval. The pre-exit signal indicates the ADS to maintain stability of a traveling status of the vehicle, and the warning signal prompts the driver to take over the vehicle.

After determining the ESC activation probability, the vehicle management module determines whether the ESC activation probability is greater than the preset latch interval.

In some optional implementations, if the ESC activation probability is less than the latch interval, the vehicle management module determines that a probability of activating the ESC of the vehicle in a current status is not high, and continues to obtain the traveling data to determine the ESC activation probability.

In some other optional implementations, if the ESC activation probability is within the latch interval, the vehicle management module determines that the ESC of the vehicle may be activated in the current status, keeps output enabling of the pre-exit signal, and continues to obtain the traveling data to determine the ESC activation probability.

When determining that the ESC activation probability is within the latch interval, the vehicle management module keeps the output enabling of the pre-exit signal, so as to avoid oscillation of an enabling fluctuation bit of the pre-exit signal when the ESC activation probability fluctuates near a threshold of the latch interval. In addition, when determining that the ESC activation probability is greater than the latch interval, the vehicle management module can output the pre-exit signal in time.

In some other optional implementations, the vehicle management module outputs the pre-exit signal and the warning signal if the ESC activation probability is greater than the latch interval.

In an implementation, the warning signal output by the vehicle management module includes but is not limited to: a seat shake signal, a voice prompt signal, and an image prompt signal. For example, the vehicle management module outputs the seat shake signal, and controls a seat to shake, to prompt the driver to take over the vehicle. The vehicle management module may output the voice prompt signal to prompt the driver to take over the vehicle. The vehicle management module may further output the image prompt signal on a display interface of the vehicle to prompt the driver to take over the vehicle.

Optionally, the vehicle management module may increase a strength and a frequency of the warning signal as an output time of the warning signal increases, to better prompt the driver to take over the vehicle.

For example, when determining that the ESC activation probability is greater than the latch interval, the vehicle management module outputs the seat shake signal, and prompts, by shaking the seat, the driver to take over the vehicle. If the driver does not take over the vehicle within 30 seconds after the seat shake signal is output, the vehicle management module adjusts the seat shake signal to increase a frequency of the seat shake, so as to prompt the driver to take over the vehicle as soon as possible.

In an implementation, the vehicle management module may output the pre-exit signal in S102 in the following steps:
B1: The vehicle management module sends the pre-exit signal to the ADS, and determines that the vehicle enters an ADS pre-exit phase.

In some optional implementations, the vehicle management module sends the pre-exit signal to the ADS, to notify the ADS that the ESC of the vehicle is about to be activated. After receiving the pre-exit signal, the ADS may maintain stability of the traveling status of the vehicle, to prevent the vehicle management module from activating the ESC.

B2: The vehicle management module adjusts a steering direction, a driving torque, and a braking torque of the vehicle by using the ADS, to control the traveling status of the vehicle to be in a stable deceleration status.

Optionally, when sending the pre-exit signal to the ADS, the vehicle management module may further send ESC activation information to the ADS. The ADS may adjust the steering direction, the driving torque, and the braking torque of the vehicle based on the ESC activation information, to control the traveling status of the vehicle to be in the stable deceleration status.

In some optional implementations, the vehicle management module may adjust the steering direction, the driving torque, and the braking torque of the vehicle by using the ADS, to control the traveling status of the vehicle to be in the stable deceleration status, so as to maintain stability of the traveling status of the vehicle, thereby preventing the vehicle management module from activating the ESC to maintain stability of the vehicle.

In some optional implementations, after outputting the pre-exit signal and the warning signal, the vehicle management module may further determine whether the ESC activation probability is less than the latch interval.

In the ADS pre-exit phase, the vehicle management module continues to determine the ESC activation probability, and determines whether the ESC activation probability is less than the latch interval.

In some optional implementations, if the ESC activation probability is less than the latch interval, statistics are collected on duration in which the ESC activation probability is less than the latch interval. The vehicle management module stops outputting the pre-exit signal and the warning signal when the duration is greater than a time threshold.

When the ESC activation probability is less than the latch interval, the vehicle management module determines that the traveling status of the vehicle gradually tends to be stable. The vehicle management module continues to determine the ESC activation probability, and collects statistics on the duration in which the ESC activation probability is less than the latch interval.

Optionally, when determining that the duration in which the ESC activation probability is less than the latch interval is greater than the time threshold, the vehicle management module determines that the traveling status of the vehicle already tends to be stable, and stops outputting the pre-exit signal and the warning signal. In this case, the vehicle management module determines to continue to use the intelligent driving function for the vehicle.

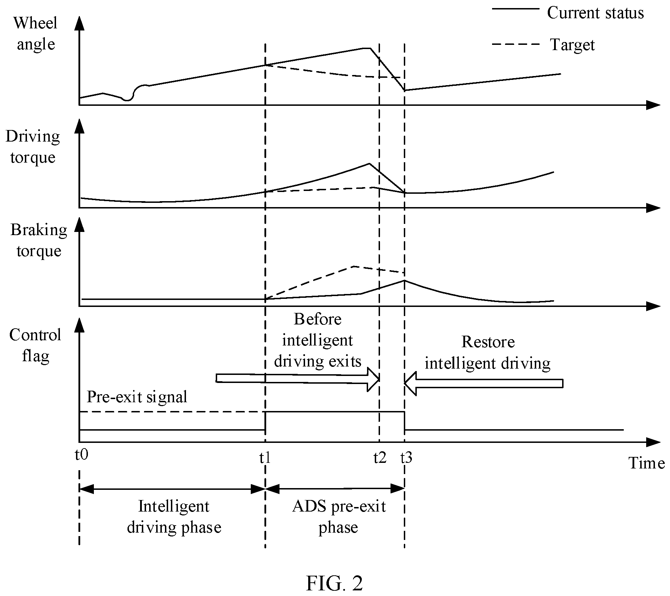

For example, as shown in FIG. 2, an embodiment of this invention provides a schematic diagram of a traveling status of a vehicle. At a moment t0, the vehicle is in an intelligent driving phase, and the ADS normally takes over the vehicle. The vehicle management module imposes no limitation on the ADS, and the vehicle management module does not output the enabling flag bit of the pre-exit signal. In addition, under control of the ADS in the intelligent driving phase, no braking torque is applied to the vehicle, and a driving torque and a wheel angle of the vehicle gradually tend to increase. At a moment t1, after determining that the ESC activation probability is greater than the latch interval, the vehicle management module outputs the enabling flag bit of the pre-exit signal, and determines that the vehicle enters the ADS pre-exit phase. In the ADS pre-exit phase, taking over the vehicle by the ADS is limited by the vehicle management module. After receiving the pre-exit signal, the ADS performs a limiting measure. The limiting measure includes but is not limited to: limiting a further increase of the wheel angle, limiting a further increase of the driving torque, gradually increasing the braking torque, and slowly decelerating. In the ADS pre-exit phase, the ADS performs the limiting measure, so that the wheel angle and the driving torque each change from a previous situation in which a current value is greater than a target value to a situation in which the current value is not greatly different from the target value, so that the vehicle management module determines, at a moment t2, that the ESC activation probability is less than the latch interval. After the moment t2, the ADS still performs the limiting measure, so that the ESC activation probability determined by the vehicle management module at a moment t3 is still less than the latch interval. That is, in a time period from the moment t2 to the moment t3, the ESC activation probability is always less than the latch interval. When the time period between t2 and t3 reaches the duration in which the ESC activation probability is less than the latch interval, the vehicle management module stops outputting the pre-exit signal at the moment t3, and the vehicle re-enters the intelligent driving phase.

In some other optional implementations, the vehicle management module obtains a stability parameter when the ESC activation probability is greater than the latch interval, or the ESC activation probability is within the latch interval.

In the ADS pre-exit phase, when determining that the ESC activation probability is greater than the latch interval or the ESC activation probability is within the latch interval, the vehicle management module determines that the vehicle is still in an unstable status after the ADS maintains stability of the traveling status of the vehicle. The vehicle management module obtains the stability parameter, and determines whether the ESC needs to be activated to maintain stability of the traveling status of the vehicle.

S103: The vehicle management module obtains the stability parameter of the vehicle, where the stability parameter represents a stability characteristic of the traveling status of the vehicle.

In some optional implementations, the stability parameter includes but is not limited to: the yaw angular velocity and the centroid side-slip angle. The vehicle management module may obtain the stability parameter by using an existing stability parameter obtaining method, or may obtain the stability parameter in another manner. This is not limited in this embodiment of this invention.

S104: The vehicle management module activates the ESC when the stability parameter meets an ESC activation condition.

In some optional implementations, the vehicle management module determines whether the obtained stability parameter meets the ESC activation condition. The ESC activation condition may be a condition under which the vehicle is in an unstable status. For example, the ESC activation condition may be that a moving track of the vehicle does not match an expected track of the intelligent driving function, or the vehicle has an insufficient steering trend, or the vehicle has an excessive steering trend.

Optionally, if the stability parameter does not meet the ESC activation condition, the vehicle management module determines the ESC activation probability, and determines whether the ESC activation probability is less than the latch interval.

Optionally, the vehicle management module activates the ESC if the stability parameter meets the ESC activation condition.

In some optional embodiments, when determining that the stability parameter meets the ESC activation condition, the vehicle management module activates the ESC, determines that the vehicle enters an ESC activation phase, and exits the ADS.

When determining that the stability parameter meets the ESC activation condition, the vehicle management module determines that the traveling status of the vehicle is in an unstable status, and activates the ESC, to control, by using the ESC, the traveling status of the vehicle to restore to the stable status.

In some optional implementations, in the ESC activation phase, the vehicle management module adjusts the steering direction, the driving torque, and the braking torque of the vehicle by using the ESC, to control the traveling status of the vehicle to be in the stable deceleration status.

The vehicle management module obtains the stability parameter in the ESC activation phase and determines whether the stability parameter meets a stability condition. If the stability parameter meets the stability condition, the vehicle management module exits the ESC.

In some optional implementations, after exiting the ESC, the vehicle management module adjusts the steering direction, the driving torque, and the braking torque of the vehicle, to control the traveling status of the vehicle to be in the stable deceleration status.

When the vehicle is in the stable deceleration status, the vehicle management module determines whether the driver takes over the vehicle within a warning time period after the warning signal is output.

In some optional implementations, the vehicle management module controls the vehicle to brake if the driver does not take over the vehicle within the warning time period.

When the driver does not take over the vehicle within the warning time period, the vehicle management module obtains the traveling data, determines a distance between the vehicle and an obstacle in front of the vehicle, and determines, based on the distance, a braking pressure value used for maintaining stable braking of the vehicle. The vehicle management module sends the braking pressure value to a hydraulic unit, so that the hydraulic unit adjusts braking pressure to the braking pressure value, to control the vehicle to brake.

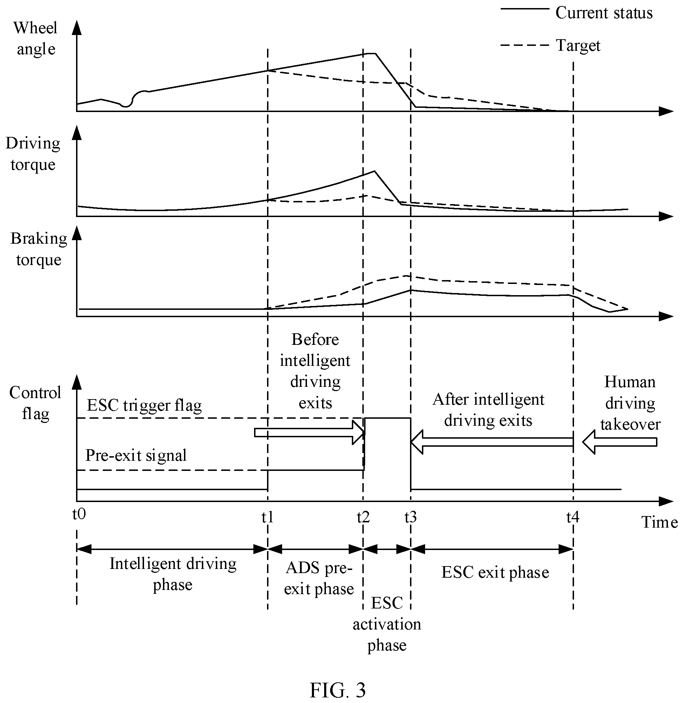

For example, as shown in FIG. 3, an embodiment of this application provides a schematic diagram of another traveling status of a vehicle. At a moment t0, the vehicle is in an intelligent driving phase, and the ADS normally takes over the vehicle. The vehicle management module imposes no limitation on the ADS, and the vehicle management module does not output the enabling flag bit of the pre-exit signal. In addition, under control of the ADS in the intelligent driving phase, no braking torque is applied to the vehicle, and a driving torque and a wheel angle of the vehicle gradually tend to increase. At a moment t1, after determining that the ESC activation probability is greater than the latch interval, the vehicle management module outputs the enabling flag bit of the pre-exit signal, and determines that the vehicle enters the ADS pre-exit phase. In the ADS pre-exit phase, taking over the vehicle by the ADS is limited by the vehicle management module. After receiving the pre-exit signal, the ADS performs a limiting measure. The limiting measure includes but is not limited to: limiting a further increase of the wheel angle, limiting a further increase of the driving torque, gradually increasing the braking torque, and slowly decelerating. After entering the ADS pre-exit phase at the moment t1, it indicates that a series of measures performed by the ADS in the ADS pre-exit phase fail to restore stability of the vehicle in time. As a result, a current value of the wheel angle is always greater than a target value and continuously increases, a current value of the driving torque is always greater than a target value and continuously increases, and a current value of the braking torque is less than a target value. In this way, the stability parameter of the vehicle meets the ESC activation condition at a moment t2, and the vehicle management module outputs an ESC trigger flag, activates the ESC, and simultaneously exits the ADS. That is, in a time period from the moment t1 to the moment t2, the vehicle is in the ADS pre-exit phase. After the moment t2, the vehicle is in the ESC activation phase, and in the ESC activation phase, the ADS has exited. At the moment t2, the ESC continuously reduces the wheel angle and the driving torque, and activates corresponding wheel cylinder pressurization to control the vehicle to restore stability. At a moment t3, when the current value of the wheel angle is less than the target value, the current value of the driving torque is less than the target value, and a difference between the current value and the target value of the braking torque is not large, the vehicle management module exits the ESC when determining that the stability parameter of the vehicle meets the stability condition. In this case, the ESC activation phase ends. At the moment t3, after the ESC exits, the vehicle management module determines that the vehicle enters an ESC exit phase, continuously reduces the wheel angle and the drive torque, and simultaneously maintains or reduces the braking pressure until the driver takes over the vehicle at a moment t4. In this case, the ESC exit phase ends. At the moment t4, the vehicle management module determines that the vehicle enters a human driving takeover mode.

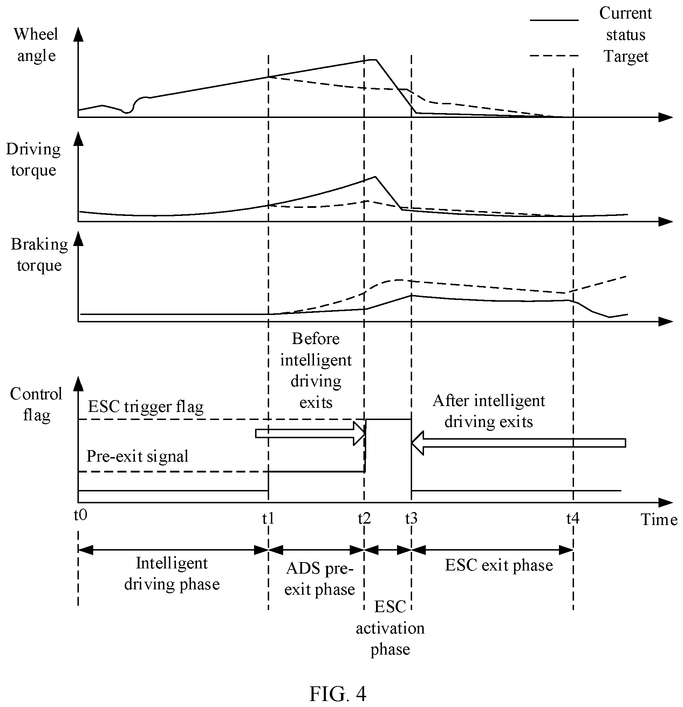

For another example, as shown in FIG. 4, an embodiment of this invention provides a schematic diagram of still another traveling status of a vehicle. In a time period from a moment t0 to a moment t1 in FIG. 4, the vehicle is in an intelligent driving phase. In the intelligent driving phase, an execution process of the ADS and the vehicle management module is the same as the execution process corresponding to the time period from the moment t0 to the moment t1 in FIG. 3. In a time period from a moment t1 to a moment t2 in FIG. 4, the vehicle is in the ADS pre-exit phase. In the ADS pre-exit phase, an execution process of the ADS and the vehicle management module is the same as the execution process corresponding to the time period from the moment t1 to the moment t2 in FIG. 3. In a time period from a moment t2 to a moment t3 in FIG. 4, the vehicle is in an ESC activation phase. In the ESC activation phase, an execution process of the ESC and the vehicle management module is the same as the execution process corresponding to the time period from the moment t2 to the moment t3 in FIG. 3. At the moment t3, when a current value of the wheel angle in FIG. 4 is less than a target value, a current value of the driving torque is less than a target value, and a difference between a current value and a target value of the braking torque is not large, the vehicle management module exits the ESC when determining that the stability parameter of the vehicle meets the stability condition. In this case, the ESC activation phase ends. At the moment t3, after the ESC exits, the vehicle management module determines that the vehicle enters an ESC exit phase, continuously reduces the wheel angle and the driving torque, and simultaneously maintains or reduces the braking pressure. After determining that the driver does not take over the vehicle within a warning time corresponding to the warning signal, the vehicle management module maintains or reduces the braking torque, and simultaneously reduces the wheel angle and the driving torque to 0. The vehicle management module controls the vehicle to brake at a moment t4. After the moment t4, the vehicle is in a braking status, and the vehicle management module controls the braking torque to decrease.

In the foregoing embodiment, after determining that the intelligent driving function of the vehicle is enabled, the vehicle management module obtains the ESC activation probability, and determines, based on whether the ESC activation probability is greater than the latch interval, whether the traveling status of the vehicle is stable. When the ESC activation probability is greater than the latch interval, the vehicle management module outputs the warning signal to prompt the driver to take over the vehicle while outputting the pre-exit signal of the ADS and maintaining stability of the traveling status of the vehicle by using the ADS. In addition, when determining that the stability parameter of the vehicle meets the ESC activation condition, the vehicle management module activates the ESC, to provide a reaction time for the driver, thereby reducing a safety risk of taking over the vehicle by the driver after the ADS exits.

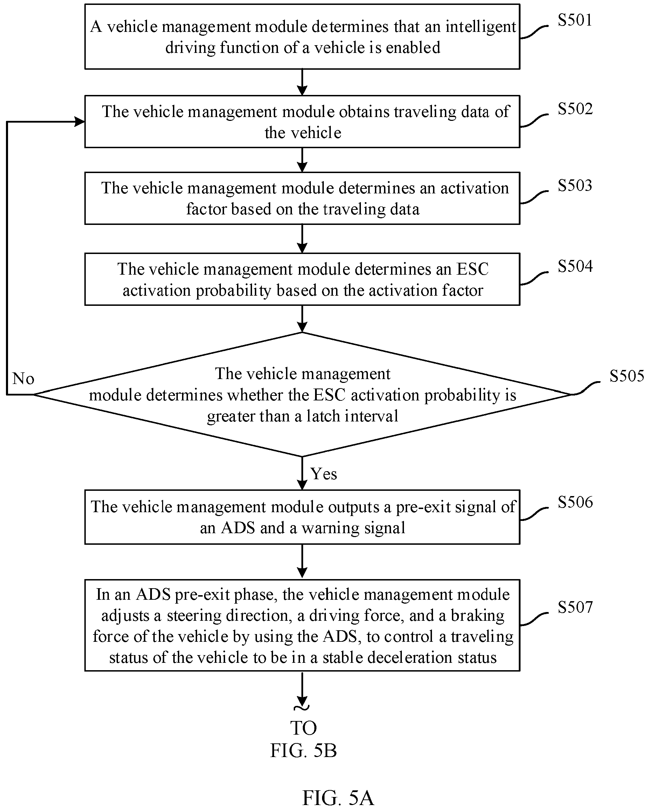

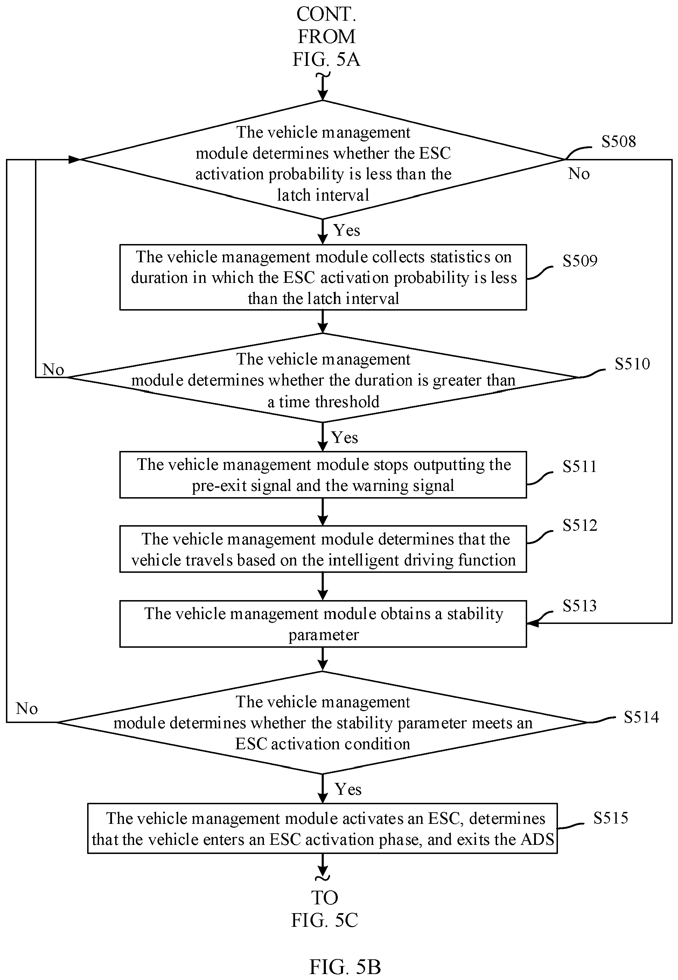

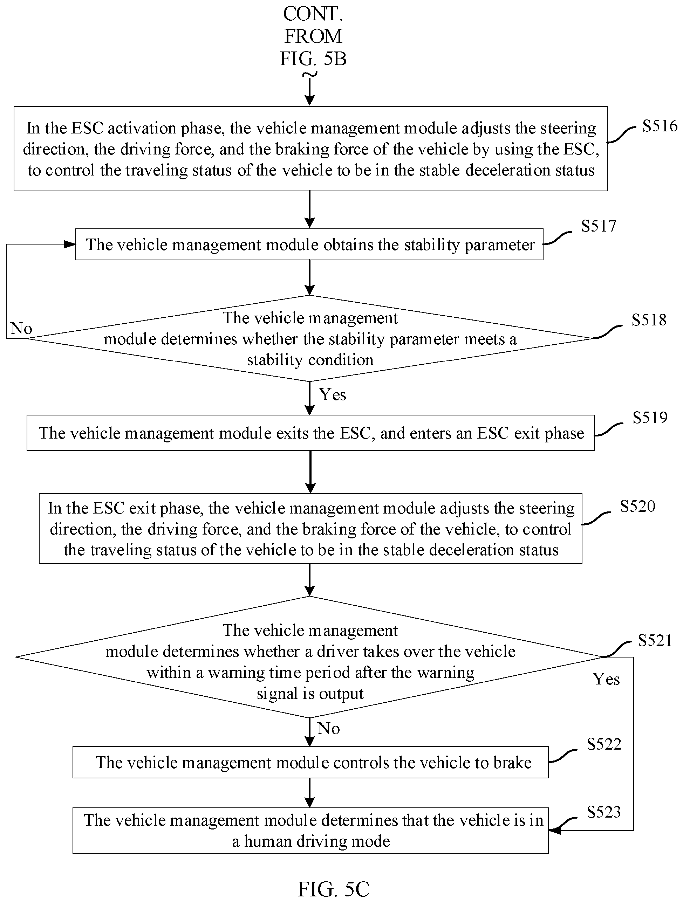

Based on the solution for activating an ESC of an intelligent driving vehicle shown in FIG. 1, the following continues to specifically describe the solution by using an example in which the vehicle management module performs an ESC activation process. FIG. 5A to FIG. 5C are a schematic flowchart of a method for activating an ESC of an intelligent driving vehicle according to an embodiment of this invention. The following describes a specific flow of this method with reference to FIG. 5A to FIG. 5C.

S501: The vehicle management module determines that an intelligent driving function of the vehicle is enabled.

S502: The vehicle management module obtains traveling data of the vehicle.

The traveling data includes but is not limited to: operation input information of a driver, vehicle status information obtained by a vehicle sensor, a driver image collected by an in-vehicle camera, and a road image and an environment image collected by a camera outside the vehicle. The operation input information of the driver includes but is not limited to: a steering wheel angle, a throttle pedal stroke, and a brake pedal stroke. The vehicle status information obtained by the sensor includes but is not limited to: horizontal and longitudinal accelerations, a wheel speed, a vehicle speed, a yaw angular velocity, a side-slip angle, and a wheel slip rate.

S503: The vehicle management module determines an activation factor based on the traveling data. The activation factor includes at least one parameter of a focus degree, a vehicle status parameter, and a road adhesion coefficient. The focus degree represents a capability of the driver to take over the vehicle after an ADS exits.

Optionally, a process in which the vehicle management module determines the activation factor based on the traveling data is the same as the process described in the embodiment corresponding to A1 in S101 in FIG. 1, and details are not described herein again.

S504: The vehicle management module determines an ESC activation probability based on the activation factor.

In an implementation, the vehicle management module may perform weight normalization on the activation factor, to obtain the ESC activation probability.

S505: The vehicle management module determines whether the ESC activation probability is greater than a latch interval; and if the ESC activation probability is greater than the latch interval, the vehicle management module performs step S506; or if the ESC activation probability is not greater than the latch interval, the vehicle management module performs step S502.

S506: The vehicle management module outputs a pre-exit signal of the ADS and a warning signal. The pre-exit signal indicates the ADS to maintain stability of a traveling status of the vehicle, and the warning signal prompts the driver to take over the vehicle.

In some optional implementations, the vehicle management module sends the pre-exit signal to the ADS, and determines that the vehicle enters an ADS pre-exit phase.

S507: In the ADS pre-exit phase, the vehicle management module adjusts a steering direction, a driving torque, and a braking torque of the vehicle by using the ADS, to control the traveling status of the vehicle to be in a stable deceleration status.

S508: The vehicle management module determines whether the ESC activation probability is less than the latch interval; and if the ESC activation probability is less than the latch interval, the vehicle management module performs step S509; or if the ESC activation probability is not less than the latch interval, the vehicle management module performs step S513.

S509: The vehicle management module collects statistics on duration in which the ESC activation probability is less than the latch interval.

S510: The vehicle management module determines whether the duration is greater than a time threshold; and if the duration is greater than the time threshold, the vehicle management module performs step S511; or if the duration is not greater than the time threshold, the vehicle management module performs step S508.

S511: The vehicle management module stops outputting the pre-exit signal and the warning signal.

S512: The vehicle management module determines that the vehicle travels based on the intelligent driving function.

S513: The vehicle management module obtains a stability parameter.

S514: The vehicle management module determines whether the stability parameter meets an ESC activation condition; and if the stability parameter meets the ESC activation condition, the vehicle management module performs step S515; or if the stability parameter does not meet the ESC activation condition, the vehicle management module performs step S508.

S515: The vehicle management module activates the ESC, determines that the vehicle enters an ESC activation phase, and exits the ADS.

S516: In the ESC activation phase, the vehicle management module adjusts the steering direction, the driving torque, and the braking torque of the vehicle by using the ESC, to control the traveling status of the vehicle to be in the stable deceleration status.

S517: The vehicle management module obtains the stability parameter.

S518: The vehicle management module determines whether the stability parameter meets a stability condition; and if the stability parameter does not meet the stability condition, the vehicle management module performs step S517; or if the stability parameter meets the stability condition, the vehicle management module performs step S519.

S519: The vehicle management module exits the ESC, and enters an ESC exit phase.

S520: In the ESC exit phase, the vehicle management module adjusts the steering direction, the driving torque, and the braking torque of the vehicle, to control the traveling status of the vehicle to be in the stable deceleration status.

S521. The vehicle management module determines whether the driver takes over the vehicle in a warning time period after the warning signal is output; and if the driver does not take over the vehicle in the warning time period after the warning signal is output, the vehicle management module performs step S522; or if the driver takes over the vehicle in the warning time period after the warning signal is output, the vehicle management module performs step S523.

S522: The vehicle management module controls the vehicle to brake.

S523: The vehicle management module determines that the vehicle is in a human driving mode.

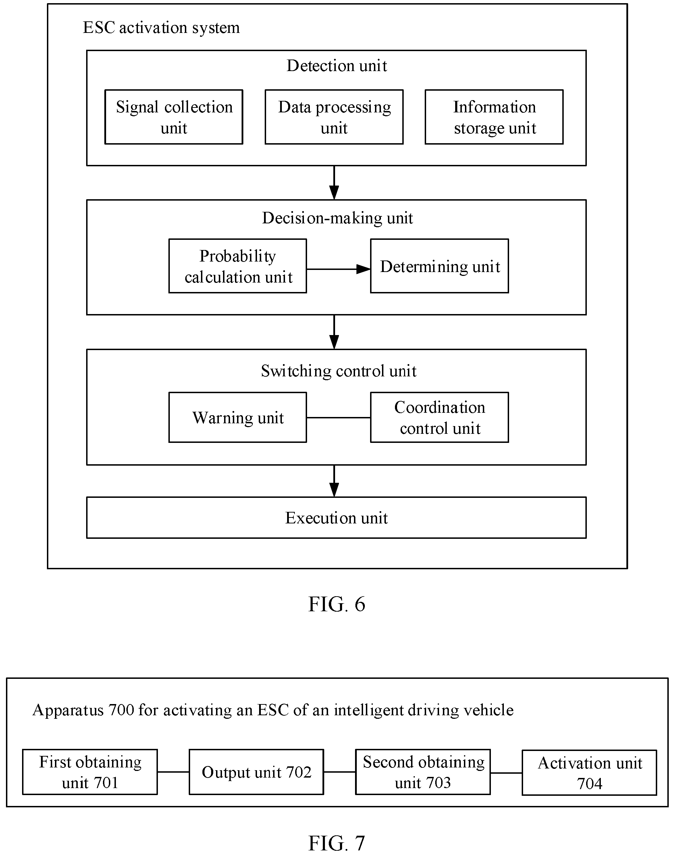

Based on a same inventive concept, an embodiment of this invention further provides an ESC activation system. The ESC activation system may be located in a vehicle management module, or may be located in another processing module, and is used in an intelligent driving vehicle. As shown in FIG. 6, the ESC activation system includes: a detection unit, a decision-making unit, a switching control unit, and an execution unit.

The detection unit may be configured to: sense a surrounding environment of a vehicle, detect a vehicle status, and monitor a driver status.

In an optional implementation, the detection unit may further include a signal collection unit, a data processing unit, and an information storage unit, as shown in FIG. 6. The information collection unit is configured to obtain a signal on a vehicle bus in real time. The data processing unit determines a current status parameter of the vehicle based on the obtained signal in combination with vehicle historical status information that is in the information storage unit. The detection unit may further determine to output a focus degree of a driver and a road adhesion coefficient based on sensor data by using the data processing unit. For example, the detection unit may fuse sensor data collected by sensors such as a visual camera, a millimeter-wave radar, and a laser radar, and output parameters such as the focus degree and the road adhesion coefficient by using a neural network algorithm and status estimation. The information storage unit is configured to store the signal obtained by the signal collection unit and a parameter obtained by the data processing unit through processing.

The decision-making unit is configured to: determine an ESC activation probability, and output a pre-exit signal of an ADS based on the ESC activation probability.

In an implementation, the decision-making unit may further include a probability calculation unit and a determining unit, as shown in FIG. 6. The probability calculation unit is configured to calculate the ESC activation probability in a current status based on the parameters output by the detection unit. The determining unit is configured to determine whether the ESC activation probability output by the ESC activation probability calculation unit is greater than a preset latch interval. When determining that the ESC activation probability is greater than the latch interval, the determining unit outputs the pre-exit signal of the ADS, so that the ADS receives the pre-exit signal and maintains stability of the traveling status of the vehicle. A warning signal is output. In this case, the ESC activation system considers that there is a high probability that the ESC is activated. When the warning signal is output, the driver may be warned in advance before the ADS exits, and the driver is prompted to take over the vehicle, so as to reduce a safety risk of taking over the vehicle by the driver.

The switching control unit is configured to: switch a vehicle mode, maintain stability of the traveling status of the vehicle, and control the vehicle to brake.

In an implementation, the switching control unit may further include a warning unit, as shown in FIG. 6. After receiving the pre-exit signal output by the determining unit, the warning unit outputs the warning signal, to warn the driver in advance before the ADS exits, so as to prompt the driver to take over the vehicle. In an implementation, in a working process, a form in which the warning unit sends the warning signal to the driver to prompt the driver to take over the vehicle includes but is not limited to: seat shake, voice prompt, image prompt, and the like. In addition, the warning unit may further increase warning strength as a warning time increases, until the driver completely takes over the vehicle, or after enabling of the pre-exit signal is eliminated, enabling of the warning signal is automatically eliminated, or the driver manually eliminates the warning signal.

In an implementation, the switching control unit may further include a coordination control unit, as shown in FIG. 6. After the decision-making unit outputs the pre-exit signal to the coordination control unit, before the ADS exits, the coordination control unit maintains stability of the traveling status of the vehicle by using the ADS. For example, before the ADS exits, the coordination control unit may send, to the ADS, internal information triggered by the ESC, as an input for the ADS to plan and control the traveling status of the vehicle, so that the ADS maintains stability of the traveling status of the vehicle by limiting a steering direction, a driving torque, and a braking torque of the vehicle.

In the process of outputting the pre-exit signal by the decision-making unit, the probability calculation unit calculates the ESC activation probability in real time, and the determining unit determines in real time whether the ESC activation probability is greater than the latch interval. When the determining unit determines that the ESC activation probability is still greater than the latch interval, the detection unit obtains a stability parameter of the vehicle, and determines whether the stability parameter meets an ESC activation condition. After the stability parameter meets the ESC activation condition, the determining unit activates the ESC and exits the ADS.

In an implementation, after the ESC is activated and the ADS exits, the coordination control unit in the switching control unit maintains stability of the traveling status of the vehicle by using the ESC. For example, the ESC may slowly brake to reduce a vehicle speed by reducing a wheel angle, reducing a longitudinal driving torque, and increasing a lateral force, so as to maintain stability of the traveling status of the vehicle. After the traveling status of the vehicle tends to be stable and the ESC exits, the switching control unit may maintain stability of the traveling status of the vehicle until the driver takes over the vehicle, or the switching control unit controls the vehicle to brake.

The execution unit adjusts the vehicle based on limitation information output by the switching control unit. For example, the execution unit includes but is not limited to an ESP power steering motor, a drive motor control unit, and a braking hydraulic control unit. The ESP power steering motor adjusts a current angle of the vehicle based on an angle requirement in the limitation information. The drive motor control unit adjusts a current driving torque of the vehicle based on a driving requirement in the limitation information. The braking hydraulic control unit adjusts a current braking torque of the vehicle based on a braking requirement in the limitation information. In addition, the execution unit may further display the limitation information in a display interface, and notify the driver of content such as a current limitation on the vehicle.

In some optional implementations, the signal collection unit obtains traveling data of the vehicle, and transmits the traveling data to the data processing unit. The data processing unit determines an activation factor based on the received traveling data. The probability calculation unit in the decision-making unit determines the ESC activation probability based on the received activation factor, and sends the determined ESC activation probability to the determining unit. When determining that the ESC activation probability is greater than the latch interval, the determining unit sends the warning signal to the warning unit in the switching control unit, and sends the pre-exit signal to the coordination control unit in the switching control unit. The warning unit warns the driver based on the received warning signal. The coordination control unit maintains, based on the received pre-exit signal, stability of the traveling status of the vehicle by using the ADS. In this case, in a process in which the decision-making unit outputs the pre-exit signal, the probability calculation unit calculates the ESC activation probability in real time. When the determining unit determines that the ESC activation probability is still greater than the latch interval, the determining unit receives the stability parameter of the vehicle obtained by the detection unit. When the stability parameter meets the ESC activation condition, the determining unit activates the ESC and exits the ADS. When the determining unit determines that the stability parameter satisfies a stability condition, the determining unit exits the ESC. In addition, after determining that the ESC exits, the coordination control unit sends the limitation information to the execution unit, to maintain stability of the traveling status of the vehicle until the driver takes over the vehicle, or controls the vehicle to brake when it is determined that the driver does not take over the vehicle.

Based on a same technical concept, an embodiment of this invention further provides an apparatus for activating an ESC of an intelligent driving vehicle. As shown in FIG. 7, the ESC activation apparatus 700 may include:
a first obtaining unit 701, configured to obtain an ESC activation probability after an intelligent driving function of the vehicle is enabled;
an output unit 702, configured to output a pre-exit signal of an autonomous driving system ADS and a warning signal when the ESC activation probability is greater than a preset latch interval, where the pre-exit signal indicates the ADS to maintain stability of a traveling status of the vehicle, and the warning signal prompts a driver to take over the vehicle;
a second obtaining unit 703, configured to obtain a stability parameter of the vehicle, where the stability parameter represents a stability characteristic of the traveling status of the vehicle; and
an activation unit 704, configured to activate the ESC when the stability parameter meets an ESC activation condition.

In a possible design, the first obtaining unit 701 is specifically configured to:
obtain traveling data of the vehicle; and
determine the ESC activation probability based on the traveling data.

In a possible design, the first obtaining unit 701 is specifically configured to:
determine an activation factor based on the traveling data, where the activation factor includes at least one parameter of a focus degree, a vehicle status parameter, and a road adhesion coefficient, and the focus degree represents a capability of the driver to take over the vehicle after the ADS exits; and
determine the ESC activation probability based on the activation factor.

In a possible design, the first obtaining unit 701 is specifically configured to:
perform weight normalization on the activation factor, to obtain the ESC activation probability.

In a possible design, the output unit 702 is specifically configured to:
send the pre-exit signal to the ADS, and determine that the vehicle enters an ADS pre-exit phase; and
adjust a steering direction, a driving torque, and a braking torque of the vehicle by using the ADS, to control the traveling status of the vehicle to be in a stable deceleration status.

In a possible design, after the pre-exit signal of the autonomous driving system ADS and the warning signal are output, the second obtaining unit 703 is further configured to:
determine whether the ESC activation probability is less than the latch interval; and
obtain the stability parameter if the ESC activation probability is greater than the latch interval, or the ESC activation probability is within the latch interval; or
collect statistics on duration in which the ESC activation probability is less than the latch interval if the ESC activation probability is less than the latch interval; and stop outputting the pre-exit signal and the warning signal when the duration is greater than a time threshold.

In a possible design, the activation unit 704 is specifically configured to:
activate the ESC, determine that the vehicle enters an ESC activation phase, and exit the ADS;
adjust the steering direction, the driving torque, and the braking torque of the vehicle by using the ESC in the ESC activation phase, to control the traveling status of the vehicle to be in the stable deceleration status; and
obtain the stability parameter, and determine whether the stability parameter meets a stability condition; and exit the ESC if the stability parameter meets the stability condition.

In a possible design, after exiting the ESC, the activation unit 704 is further configured to:
adjust the steering direction, the driving torque, and the braking torque of the vehicle, to control the traveling status of the vehicle to be in the stable deceleration status;
determine whether the driver takes over the vehicle within a warning time period after the warning signal is output; and
control the vehicle to brake if the driver does not take over the vehicle within the warning time period.

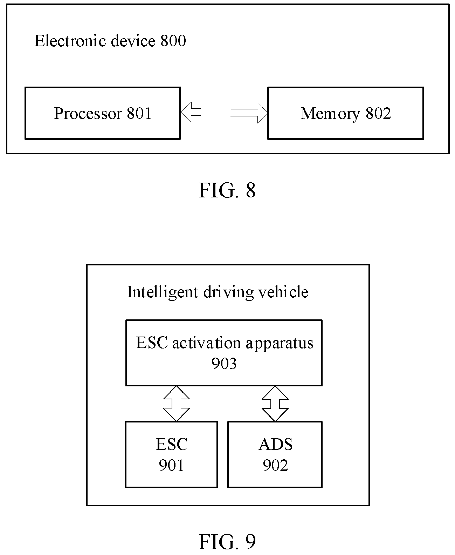

As shown in FIG. 8, an embodiment of this invention provides a schematic diagram of a possible structure of an electronic device. The electronic device is applied to an intelligent driving vehicle. The structure of the electronic device is shown in FIG. 8, and includes a processor 801 and a memory 802. The memory stores one or more computer programs, and the one or more computer programs include instructions. When the processor invokes the instructions, the electronic device is enabled to perform the foregoing embodiments and the methods for activating an ESC of an intelligent driving vehicle provided in the foregoing embodiments.

As shown in FIG. 9, an embodiment of this invention provides a schematic diagram of a possible structure of an intelligent driving vehicle. The intelligent driving vehicle includes an ESC 901, an ADS 902, and an ESC activation apparatus 903. When the ADS 902 is activated, the ESC activation apparatus 903 performs the foregoing embodiments and the methods for activating an ESC of an intelligent driving vehicle provided in the foregoing embodiments.

Based on the foregoing content and a same concept, this invention provides a computer-readable storage medium. The computer-readable storage medium stores a computer program or instructions. When the computer program or the instructions are executed, a computing device is enabled to perform the methods in the foregoing method embodiments.

Based on the foregoing content and a same concept, this invention provides a computer program product. When a computer executes the computer program product, a computing device is enabled to perform the methods in the foregoing method embodiments.

It should be understood that, in embodiments of this invention, division into modules is used as an example, and is merely logical function division. In actual implementation, another division manner may be used. In addition, functional modules in embodiments of this invention may be integrated into one processor, or may exist alone physically, or two or more modules may be integrated into one module. The integrated module may be implemented in a form of hardware, or may be implemented in a form of a software functional module.

A person skilled in the art should understand that embodiments of this invention may be provided as a method, a system, or a computer program product. Therefore, this application may use a form of a hardware-only embodiment, a software-only embodiment, or an embodiment with a combination of software and hardware. In addition, this invention may use a form of a computer program product implemented on one or more computer-usable storage media (including but not limited to a disk memory, a CD-ROM, an optical memory, and the like) that include computer-usable program code.

This invention is described with reference to the flowcharts and/or the block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided to a processor of a general-purpose computer, a special-purpose computer, an embedded processor, or another programmable data processing device to generate a machine, such that the instructions executed by the processor of the computer or another programmable data processing device generate an apparatus for implementing a specified function in one or more procedures in the flowcharts and/or one or more blocks in the block diagrams.

These computer program instructions may alternatively be stored in a computer-readable memory that can guide a computer or another programmable data processing device to work in a specific manner, so that the instructions stored in the computer-readable memory generate an artifact that includes an instruction apparatus. The instruction apparatus implements a specified function in one or more procedures in the flowcharts and/or one or more blocks in the block diagrams.

These computer program instructions may alternatively be loaded onto a computer or another programmable data processing device, so that a series of operation steps are performed on the computer or the another programmable data processing device, to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to this invention. In this way, this invention is also intended to cover these modifications and variations, provided that these modifications and variations of this invention fall within the scope of protection defined by claims of this invention.

## Claims

1. A method for activating a chassis electronic stability controller, ESC, of an intelligent driving vehicle, comprising:
obtaining (S101) an ESC activation probability after an intelligent driving function of the vehicle is enabled;
outputting (S102) a pre-exit signal of an autonomous driving system, ADS, and a warning signal when the ESC activation probability is greater than a preset latch interval, wherein the pre-exit signal indicates the ADS to maintain stability of a traveling status of the vehicle, and the warning signal prompts a driver to take over the vehicle;
obtaining (S103) a stability parameter of the vehicle, wherein the stability parameter represents a stability characteristic of the traveling status of the vehicle; and
activating (S104) the ESC when the stability parameter meets an ESC activation condition.

2. The method according to claim 1, wherein the obtaining (S101) an ESC activation probability comprises:
obtaining traveling data of the vehicle; and
determining the ESC activation probability based on the traveling data.

3. The method according to claim 2, wherein the determining the ESC activation probability based on the traveling data comprises:
determining an activation factor based on the traveling data, wherein the activation factor comprises at least one parameter of a focus degree, a vehicle status parameter, and a road adhesion coefficient, and the focus degree represents a capability of the driver to take over the vehicle after the ADS exits; and
determining the ESC activation probability based on the activation factor.

4. The method according to claim 2 or 3, wherein the determining the ESC activation probability based on the activation factor comprises:
performing weight normalization on the activation factor, to obtain the ESC activation probability.

5. The method according to any one of claims 1 to 4, wherein the outputting (S102) a pre-exit signal of an autonomous driving system ADS comprises:
sending the pre-exit signal to the ADS, and determining that the vehicle enters an ADS pre-exit phase; and
adjusting a steering direction, a driving torque, and a braking torque of the vehicle by using the ADS, to control the traveling status of the vehicle to be in a stable deceleration status.

6. The method according to any one of claims 1 to 5, wherein after the outputting (S102) a pre-exit signal of an autonomous driving system ADS and a warning signal, the method further comprises:
determining whether the ESC activation probability is less than the latch interval; and
obtaining the stability parameter if the ESC activation probability is greater than the latch interval, or the ESC activation probability is within the latch interval; or
collecting statistics on duration in which the ESC activation probability is less than the latch interval if the ESC activation probability is less than the latch interval; and stopping outputting the pre-exit signal and the warning signal when the duration is greater than a time threshold.

7. The method according to any one of claims 1 to 6, wherein the activating (S104) the ESC comprises:
activating the ESC, determining that the vehicle enters an ESC activation phase, and exiting the ADS;
adjusting the steering direction, the driving torque, and the braking torque of the vehicle by using the ESC in the ESC activation phase, to control the traveling status of the vehicle to be in the stable deceleration status; and
obtaining the stability parameter, and determining whether the stability parameter meets a stability condition; and exiting the ESC if the stability parameter meets the stability condition.

8. The method according to claim 7, wherein after the exiting the ESC, the method further comprises:
adjusting the steering direction, the driving torque, and the braking torque of the vehicle, to control the traveling status of the vehicle to be in the stable deceleration status;
determining whether the driver takes over the vehicle within a warning time period after the warning signal is output; and
controlling the vehicle to brake if the driver does not take over the vehicle within the warning time period.

9. An apparatus (700) for activating a chassis electronic stability controller, ESC, of an intelligent driving vehicle, comprising:
a first obtaining unit (701), configured to obtain an ESC activation probability after an intelligent driving function of the vehicle is enabled;
an output unit (702), configured to output a pre-exit signal of an autonomous driving system, ADS, and a warning signal when the ESC activation probability is greater than a preset latch interval, wherein the pre-exit signal indicates the ADS to maintain stability of a traveling status of the vehicle, and the warning signal prompts a driver to take over the vehicle;
a second obtaining unit (703), configured to obtain a stability parameter of the vehicle, wherein the stability parameter represents a stability characteristic of the traveling status of the vehicle; and
an activation unit (704), configured to activate the ESC when the stability parameter meets an ESC activation condition.

10. The apparatus (700) according to claim 9, wherein the first obtaining unit (701) is specifically configured to:
obtain traveling data of the vehicle; and
determine the ESC activation probability based on the traveling data.

11. The apparatus (700) according to claim 10, wherein the first obtaining unit (701) is specifically configured to:
determine an activation factor based on the traveling data, wherein the activation factor comprises at least one parameter of a focus degree, a vehicle status parameter, and a road adhesion coefficient, and the focus degree represents a capability of the driver to take over the vehicle after the ADS exits; and
determine the ESC activation probability based on the activation factor.

12. The apparatus (700) according to any one of claims 9 to 11, wherein the output unit (702) is specifically configured to:
send the pre-exit signal to the ADS, and determine that the vehicle enters an ADS pre-exit phase; and
adjust a steering direction, a driving torque, and a braking torque of the vehicle by using the ADS, to control the traveling status of the vehicle to be in a stable deceleration status.

13. The apparatus (700) according to any one of claims 9 to 12, wherein after the pre-exit signal of the autonomous driving system ADS and the warning signal are output, the second obtaining unit (703) is further configured to:
determine whether the ESC activation probability is less than the latch interval; and
obtain the stability parameter if the ESC activation probability is greater than the latch interval, or the ESC activation probability is within the latch interval; or
collect statistics on duration in which the ESC activation probability is less than the latch interval if the ESC activation probability is less than the latch interval; and stop outputting the pre-exit signal and the warning signal when the duration is greater than a time threshold.

14. The apparatus (700) according to any one of claims 9 to 13, wherein the activation unit (704) is specifically configured to:
activate the ESC, determine that the vehicle enters an ESC activation phase, and exit the ADS;
adjust the steering direction, the driving torque, and the braking torque of the vehicle by using the ESC in the ESC activation phase, to control the traveling status of the vehicle to be in the stable deceleration status; and
obtain the stability parameter, and determine whether the stability parameter meets a stability condition; and exit the ESC if the stability parameter meets the stability condition.

15. The apparatus (700) according to claim 14, wherein after exiting the ESC, the activation unit (704) is further configured to:
adjust the steering direction, the driving torque, and the braking torque of the vehicle, to control the traveling status of the vehicle to be in the stable deceleration status;
determine whether the driver takes over the vehicle within a warning time period after the warning signal is output; and
control the vehicle to brake if the driver does not take over the vehicle within the warning time period.

16. An intelligent driving vehicle, comprising a chassis electronic stability controller ESC (901), an autonomous driving system ADS (902), and the ESC activation apparatus (700) according to any one of claims 9 to 15, wherein, when the ADS is activated, the ESC activation apparatus performs the method according to any of claims 1 to 8.

17. A computer-readable storage medium, comprising computer program instructions, wherein when the computer program instructions are executed by a computer, a processor performs the method according to any one of claims 1 to 8.

## Patentansprüche

1. Verfahren zum Aktivieren einer elektronischen Fahrwerksstabilitätssteuereinheit, ESC, eines intelligenten Fahrzeugs, umfassend:
Erhalten (S101) einer ESC-Aktivierungswahrscheinlichkeit, nachdem eine intelligente Fahrfunktion des Fahrzeugs aktiviert wurde;
Ausgeben (S102) eines Übergabesignals eines autonomen Fahrsystems, ADS, und eines Warnsignals, wenn die ESC-Aktivierungswahrscheinlichkeit größer als ein voreingestelltes Halteintervall ist, wobei das Übergabesignal das ADS anweist, die Stabilität eines Fahrzustands des Fahrzeugs beizubehalten, und wobei das Warnsignal einen Fahrer auffordert, das Fahrzeug zu übernehmen;
Erhalten (S103) eines Stabilitätsparameters des Fahrzeugs, wobei der Stabilitätsparameter eine Stabilitätseigenschaft des Fahrzustands des Fahrzeugs repräsentiert; und
Aktivieren (S104) der ESC, wenn der Stabilitätsparameter eine ESC-Aktivierungsbedingung erfüllt.

2. Verfahren nach Anspruch 1, wobei das Erhalten (S101) einer ESC-Aktivierungswahrscheinlichkeit umfasst:
Erhalten von Fahrdaten des Fahrzeugs; und
Ermitteln der ESC-Aktivierungswahrscheinlichkeit basierend auf den Fahrdaten.

3. Verfahren nach Anspruch 2, wobei das Ermitteln der ESC-Aktivierungswahrscheinlichkeit basierend auf den Fahrdaten umfasst:
Ermitteln eines Aktivierungsfaktors basierend auf den Fahrdaten, wobei der Aktivierungsfaktor mindestens einen Parameter eines Aufmerksamkeitsgrads, eines Fahrzeugzustandsparameters und eines Bodenhaftungskoeffizienten umfasst und wobei der Aufmerksamkeitsgrad eine Fähigkeit des Fahrers repräsentiert, das Fahrzeug nach dem Verlassen des ADS zu übernehmen; und
Ermitteln der ESC-Aktivierungswahrscheinlichkeit basierend auf dem Aktivierungsfaktor.

4. Verfahren nach Anspruch 2 oder 3, wobei das Ermitteln der ESC-Aktivierungswahrscheinlichkeit basierend auf dem Aktivierungsfaktor umfasst:
Durchführen einer Gewichtungsnormalisierung an dem Aktivierungsfaktor, um die ESC-Aktivierungswahrscheinlichkeit zu erhalten.

5. Verfahren nach einem der Ansprüche 1 bis 4, wobei das Ausgeben (S102) eines Übergabesignals eines autonomen Fahrsystems ADS umfasst:
Senden des Übergabesignals an das ADS und Ermitteln, dass das Fahrzeug in eine ADS-Übergabephase eintritt; und
Einstellen einer Lenkrichtung, eines Antriebsmoments und eines Bremsmoments des Fahrzeugs, indem das ADS verwendet wird, um den Fahrzustand des Fahrzeugs so zu steuern, dass er sich in einem stabilen Verlangsamungszustand befindet.

6. Verfahren nach einem der Ansprüche 1 bis 5, wobei das Verfahren nach dem Ausgeben (S102) eines Übergabesignals eines autonomen Fahrsystems ADS und eines Warnsignals ferner umfasst:
Ermitteln, ob die ESC-Aktivierungswahrscheinlichkeit kleiner als das Halteintervall ist; und
Erhalten des Stabilitätsparameters, wenn die ESC-Aktivierungswahrscheinlichkeit größer als das Halteintervall ist oder die ESC-Aktivierungswahrscheinlichkeit innerhalb des Halteintervalls liegt; oder
Sammeln von Statistiken über die Dauer, in der die ESC-Aktivierungswahrscheinlichkeit kleiner als das Halteintervall ist, wenn die ESC-Aktivierungswahrscheinlichkeit kleiner als das Halteintervall ist; und Stoppen des Ausgebens des Übergabesignals und des Warnsignals, wenn die Dauer größer als ein Zeitschwellenwert ist.

7. Verfahren nach einem der Ansprüche 1 bis 6, wobei das Aktivieren (S104) der ESC umfasst:
Aktivieren der ESC, Ermitteln, dass das Fahrzeug in eine ESC-Aktivierungsphase eintritt, und Verlassen des ADS;
Einstellen der Lenkrichtung, des Antriebsmoments und des Bremsmoments des Fahrzeugs, indem die ESC in der ESC-Aktivierungsphase verwendet wird, um den Fahrzustand des Fahrzeugs so zu steuern, dass er sich im stabilen Verlangsamungszustand befindet; und
Erhalten des Stabilitätsparameters und Ermitteln, ob der Stabilitätsparameter eine Stabilitätsbedingung erfüllt; und Verlassen der ESC, wenn der Stabilitätsparameter die Stabilitätsbedingung erfüllt.

8. Verfahren nach Anspruch 7, wobei das Verfahren nach dem Verlassen der ESC ferner umfasst:
Einstellen der Lenkrichtung, des Antriebsmoments und des Bremsmoments des Fahrzeugs, um den Fahrzustand des Fahrzeugs so zu steuern, dass er sich in dem stabilen Verlangsamungszustand befindet;
Ermitteln, ob der Fahrer das Fahrzeug innerhalb eines Warnzeitraums, nachdem das Warnsignal ausgegeben wurde, übernimmt; und
Steuern des Fahrzeugs, um zu bremsen, wenn der Fahrer das Fahrzeug nicht innerhalb des Warnzeitraums übernimmt.

9. Einrichtung (700) zum Aktivieren einer elektronischen Fahrwerksstabilitätssteuereinheit, ESC, eines intelligenten Fahrzeugs, umfassend:
eine erste Erlangungseinheit (701), die konfiguriert ist zum Erhalten einer ESC-Aktivierungswahrscheinlichkeit, nachdem eine intelligente Fahrfunktion des Fahrzeugs aktiviert wurde;
eine Ausgabeeinheit (702), die konfiguriert ist zum Ausgeben eines Übergabesignals eines autonomen Fahrsystems, ADS, und eines Warnsignals, wenn die ESC-Aktivierungswahrscheinlichkeit größer als ein voreingestelltes Halteintervall ist, wobei das Übergabesignal das ADS anweist, die Stabilität eines Fahrzustands des Fahrzeugs beizubehalten, und wobei das Warnsignal einen Fahrer auffordert, das Fahrzeug zu übernehmen;
eine zweite Erlangungseinheit (703), die konfiguriert ist zum Erhalten eines Stabilitätsparameters des Fahrzeugs, wobei der Stabilitätsparameter eine Stabilitätseigenschaft des Fahrzustands des Fahrzeugs repräsentiert; und
eine Aktivierungseinheit (704), die konfiguriert ist zum Aktivieren der ESC, wenn der Stabilitätsparameter eine ESC-Aktivierungsbedingung erfüllt.

10. Einrichtung (700) nach Anspruch 9, wobei die erste Erlangungseinheit (701) insbesondere konfiguriert ist zum:
Erhalten von Fahrdaten des Fahrzeugs; und
Ermitteln der ESC-Aktivierungswahrscheinlichkeit basierend auf den Fahrdaten.

11. Einrichtung (700) nach Anspruch 10, wobei die erste Erlangungseinheit (701) insbesondere konfiguriert ist zum:
Ermitteln eines Aktivierungsfaktors basierend auf den Fahrdaten, wobei der Aktivierungsfaktor mindestens einen Parameter eines Aufmerksamkeitsgrads, eines Fahrzeugzustandsparameters und eines Bodenhaftungskoeffizienten umfasst und wobei der Aufmerksamkeitsgrad eine Fähigkeit des Fahrers repräsentiert, das Fahrzeug nach dem Verlassen des ADS zu übernehmen; und
Ermitteln der ESC-Aktivierungswahrscheinlichkeit basierend auf dem Aktivierungsfaktor.

12. Einrichtung (700) nach einem der Ansprüche 9 bis 11, wobei die Ausgabeeinheit (702) insbesondere konfiguriert ist zum:
Senden des Übergabesignals an das ADS und Ermitteln, dass das Fahrzeug in eine ADS-Übergabephase eintritt; und
Einstellen einer Lenkrichtung, eines Antriebsmoments und eines Bremsmoments des Fahrzeugs, indem das ADS verwendet wird, um den Fahrzustand des Fahrzeugs so zu steuern, dass er sich in einem stabilen Verlangsamungszustand befindet.

13. Einrichtung (700) nach einem der Ansprüche 9 bis 12, wobei die zweite Erlangungseinheit (703) nach dem Ausgeben des Übergabesignals des autonomen Fahrsystems ADS und des Warnsignals ferner konfiguriert ist zum:
Ermitteln, ob die ESC-Aktivierungswahrscheinlichkeit kleiner als das Halteintervall ist; und
Erhalten des Stabilitätsparameters, wenn die ESC-Aktivierungswahrscheinlichkeit größer als das Halteintervall ist oder die ESC-Aktivierungswahrscheinlichkeit innerhalb des Halteintervalls liegt; oder
Sammeln von Statistiken über die Dauer, in der die ESC-Aktivierungswahrscheinlichkeit kleiner als das Halteintervall ist, wenn die ESC-Aktivierungswahrscheinlichkeit kleiner als das Halteintervall ist; und Stoppen des Ausgebens des Übergabesignals und des Warnsignals, wenn die Dauer größer als ein Zeitschwellenwert ist.

14. Einrichtung (700) nach einem der Ansprüche 9 bis 13, wobei die Aktivierungseinheit (704) insbesondere konfiguriert ist zum:
Aktivieren der ESC, Ermitteln, dass das Fahrzeug in eine ESC-Aktivierungsphase eintritt, und Verlassen des ADS;
Einstellen der Lenkrichtung, des Antriebsmoments und des Bremsmoments des Fahrzeugs, indem die ESC in der ESC-Aktivierungsphase verwendet wird, um den Fahrzustand des Fahrzeugs so zu steuern, dass er sich im stabilen Verlangsamungszustand befindet; und
Erhalten des Stabilitätsparameters und Ermitteln, ob der Stabilitätsparameter eine Stabilitätsbedingung erfüllt; und Verlassen der ESC, wenn der Stabilitätsparameter die Stabilitätsbedingung erfüllt.

15. Einrichtung (700) nach Anspruch 14, wobei die Aktivierungseinheit (704) nach dem Verlassen der ESC ferner konfiguriert ist zum:
Einstellen der Lenkrichtung, des Antriebsmoments und des Bremsmoments des Fahrzeugs, um den Fahrzustand des Fahrzeugs so zu steuern, dass er sich in dem stabilen Verlangsamungszustand befindet;
Ermitteln, ob der Fahrer das Fahrzeug innerhalb eines Warnzeitraums, nachdem das Warnsignal ausgegeben wurde, übernimmt; und
Steuern des Fahrzeugs, um zu bremsen, wenn der Fahrer das Fahrzeug nicht innerhalb des Warnzeitraums übernimmt.

16. Intelligentes Fahrzeug, das eine elektronische Fahrwerksstabilitätssteuereinheit ESC (901), ein autonomes Fahrsystem ADS (902) und die ESC-Aktivierungseinrichtung (700) nach einem der Ansprüche 9 bis 15 umfasst, wobei, wenn das ADS aktiviert wird, die ESC-Aktivierungseinrichtung das Verfahren nach einem der Ansprüche 1 bis 8 durchführt.

17. Computerlesbares Speichermedium, das Computerprogrammanweisungen umfasst, wobei, wenn die Computerprogrammanweisungen von einem Computer ausgeführt werden, ein Prozessor das Verfahren nach einem der Ansprüche 1 bis 8 durchführt.

## Revendications

1. Procédé d'activation d'un correcteur électronique de trajectoire, ESC, de châssis d'un véhicule à conduite intelligente, comprenant :
l'obtention (S101) d'une probabilité d'activation d'ESC après activation d'une fonction de conduite intelligente du véhicule ;
l'émission en sortie (S102) d'un signal de pré-sortie d'un système de conduite autonome, ADS, et d'un signal d'avertissement lorsque la probabilité d'activation d'ESC est supérieure à un intervalle de verrouillage prédéfini, le signal de pré-sortie indiquant que l'ADS doit maintenir la stabilité d'un état de déplacement du véhicule, et le signal d'avertissement invitant un conducteur à prendre le contrôle du véhicule ;
l'obtention (S103) d'un paramètre de stabilité du véhicule, le paramètre de stabilité représentant une caractéristique de stabilité de l'état de déplacement du véhicule ; et
l'activation (S104) de l'ESC lorsque le paramètre de stabilité répond à une condition d'activation d'ESC.

2. Procédé selon la revendication 1, dans lequel l'obtention (S101) d'une probabilité d'activation d'ESC comprend :
l'obtention de données de déplacement du véhicule ; et
la détermination de la probabilité d'activation d'ESC sur la base des données de déplacement.

3. Procédé selon la revendication 2, dans lequel la détermination de la probabilité d'activation d'ESC sur la base des données de déplacement comprend :
la détermination d'un facteur d'activation sur la base des données de déplacement, le facteur d'activation comprenant au moins un paramètre d'un degré de focalisation, un paramètre d'état de véhicule et un coefficient d'adhérence à la route, et le degré de focalisation représentant une capacité du conducteur à prendre le contrôle du véhicule après la sortie de l'ADS ; et
la détermination de la probabilité d'activation d'ESC sur la base du facteur d'activation.

4. Procédé selon la revendication 2 ou 3, dans lequel la détermination de la probabilité d'activation d'ESC sur la base du facteur d'activation comprend :
la réalisation d'une normalisation de pondération sur le facteur d'activation, pour obtenir la probabilité d'activation d'ESC.

5. Procédé selon l'une quelconque des revendications 1 à 4, dans lequel l'émission en sortie (S102) d'un signal de pré-sortie d'un système de conduite autonome ADS comprend :
l'envoi du signal de pré-sortie à l'ADS, et la détermination que le véhicule entre dans une phase de pré-sortie d'ADS ; et
le réglage de l'orientation de direction, d'un couple d'entraînement et d'un couple de freinage du véhicule en utilisant l'ADS, afin de commander l'état de déplacement du véhicule afin qu'il se trouve dans un état de décélération stable.

6. Procédé selon l'une quelconque des revendications 1 à 5, dans lequel, après l'émission en sortie (S102) d'un signal de pré-sortie d'un système de conduite autonome ADS et d'un signal d'avertissement, le procédé comprend en outre :
la détermination si la probabilité d'activation d'ESC est inférieure à l'intervalle de verrouillage ; et
l'obtention du paramètre de stabilité si la probabilité d'activation d'ESC est supérieure à l'intervalle de verrouillage, ou si la probabilité d'activation d'ESC est comprise dans l'intervalle de verrouillage ; ou
la collecte de statistiques sur la durée pendant laquelle la probabilité d'activation d'ESC est inférieure à l'intervalle de verrouillage si la probabilité d'activation d'ESC est inférieure à l'intervalle de verrouillage ; et l'arrêt de l'émission en sortie du signal de pré-sortie et du signal d'avertissement lorsque la durée est supérieure à un seuil de temps.

7. Procédé selon l'une quelconque des revendications 1 à 6, dans lequel l'activation (S104) de l'ESC comprend :
l'activation de l'ESC, la détermination que le véhicule entre dans une phase d'activation d'ESC et la sortie de l'ADS ;
le réglage de l'orientation de direction, du couple d'entraînement et du couple de freinage du véhicule en utilisant l'ESC dans la phase d'activation d'ESC, afin de commander l'état de déplacement du véhicule pour qu'il soit dans un état de décélération stable ; et
l'obtention du paramètre de stabilité et la détermination si le paramètre de stabilité répond à une condition de stabilité ; et la sortie de l'ESC si le paramètre de stabilité répond à la condition de stabilité.

8. Procédé selon la revendication 7, dans lequel après la sortie de l'ESC, le procédé comprend en outre :
le réglage de l'orientation de direction, du couple moteur et du couple de freinage du véhicule, pour commander l'état de trajectoire du véhicule afin qu'il soit dans un état de décélération stable ;
la détermination si le conducteur prend le contrôle du véhicule dans un délai d'avertissement après l'émission du signal d'avertissement ; et
la commande du véhicule pour freiner si le conducteur ne prend pas le contrôle du véhicule dans le délai d'avertissement.

9. Appareil (700) d'activation d'un correcteur électronique de trajectoire, ESC, de châssis d'un véhicule à conduite intelligente, comprenant :
une première unité d'obtention (701), configurée pour obtenir une probabilité d'activation d'ESC après l'activation d'une fonction de conduite intelligente du véhicule ;
une unité d'émission en sortie (702), configurée pour émettre en sortie un signal de pré-sortie d'un système de conduite autonome, ADS, et un signal d'avertissement lorsque la probabilité d'activation d'ESC est supérieure à un intervalle de verrouillage prédéfini, le signal de pré-sortie indiquant que l'ADS doit maintenir la stabilité d'un état de déplacement du véhicule, et le signal d'avertissement invitant un conducteur à prendre le contrôle du véhicule ;
une deuxième unité d'obtention (703), configurée pour obtenir un paramètre de stabilité du véhicule, le paramètre de stabilité représentant une caractéristique de stabilité de l'état de déplacement du véhicule ; et
une unité d'activation (704), configurée pour activer l'ESC lorsque le paramètre de stabilité répond à une condition d'activation d'ESC.

10. Appareil (700) selon la revendication 9, la première unité d'obtention (701) étant spécifiquement configurée pour :
obtenir des données de déplacement du véhicule ; et
déterminer la probabilité d'activation d'ESC sur la base des données de déplacement.

11. Appareil (700) selon la revendication 10, la première unité d'obtention (701) étant spécifiquement configurée pour :
déterminer un facteur d'activation sur la base des données de déplacement, le facteur d'activation comprenant au moins un paramètre d'un degré de focalisation, un paramètre d'état de véhicule et un coefficient d'adhérence à la route, et le degré de focalisation représentant une capacité du conducteur à prendre le contrôle du véhicule après la sortie de l'ADS ; et
déterminer la probabilité d'activation d'ESC sur la base du facteur d'activation.

12. Appareil (700) selon l'une quelconque des revendications 9 à 11, dans lequel l'unité d'émission en sortie (702) est spécifiquement configurée pour :
envoyer le signal de pré-sortie à l'ADS, et déterminer si le véhicule entre dans une phase de pré-sortie d'ADS ; et
régler l'orientation de direction, un couple d'entraînement et un couple de freinage du véhicule en utilisant l'ADS, afin de commander l'état de déplacement du véhicule afin qu'il se trouve dans un état de décélération stable.

13. Appareil (700) selon l'une quelconque des revendications 9 à 12, dans lequel après l'émission en sortie du signal de pré-sortie du système de conduite autonome ADS et du signal d'avertissement, la deuxième unité d'obtention (703) est en outre configurée pour :
déterminer si la probabilité d'activation d'ESC est inférieure à l'intervalle de verrouillage ; et
obtenir le paramètre de stabilité si la probabilité d'activation d'ESC est supérieure à l'intervalle de verrouillage, ou si la probabilité d'activation d'ESC est comprise dans l'intervalle de verrouillage ; ou
collecter des statistiques sur la durée pendant laquelle la probabilité d'activation d'ESC est inférieure à l'intervalle de verrouillage si la probabilité d'activation d'ESC est inférieure à l'intervalle de verrouillage ; et mettre fin à l'émission en sortie du signal de pré-sortie et du signal d'avertissement lorsque la durée est supérieure à un seuil de temps.

14. Appareil (700) selon l'une quelconque des revendications 9 à 13, dans lequel l'unité d'activation (704) est spécifiquement configurée pour :
activer l'ESC, déterminer que le véhicule entre dans une phase d'activation d'ESC et sortir de l'ADS ;
régler l'orientation de direction, le couple d'entraînement et le couple de freinage du véhicule en utilisant l'ESC dans la phase d'activation d'ESC, afin de commander l'état de déplacement du véhicule pour qu'il soit dans un état de décélération stable ; et
obtenir le paramètre de stabilité et déterminer si le paramètre de stabilité répond à une condition de stabilité ; et sortir de l'ESC si le paramètre de stabilité répond à la condition de stabilité.

15. Appareil (700) selon la revendication 14, dans lequel après la sortie de l'ESC, l'unité d'activation (704) est en outre configurée pour :
régler l'orientation de direction, le couple moteur et le couple de freinage du véhicule, pour commander l'état de trajectoire du véhicule afin qu'il soit dans un état de décélération stable ;
déterminer si le conducteur prend le contrôle du véhicule dans un délai d'avertissement après l'émission du signal d'avertissement ; et
commander le véhicule pour freiner si le conducteur ne prend pas le contrôle du véhicule dans le délai d'avertissement.

16. Véhicule de conduite intelligent, comprenant un correcteur électronique de trajectoire ESC (901) de châssis, un système de conduite autonome ADS (902), et l'appareil (700) d'activation d'ESC selon l'une quelconque des revendications 9 à 15, dans lequel, lorsque l'ADS est activé, l'appareil d'activation d'ESC réalise le procédé selon l'une quelconque des revendications 1 à 8.

17. Support de stockage lisible par ordinateur, comprenant des instructions de programme informatique, lorsque les instructions de programme informatique sont exécutées par un ordinateur, un processeur réalisant le procédé selon l'une quelconque des revendications 1 à 8.
